# EUROPÄISCHE PATENTSCHRIFT

(11) **EP 3 501 941 B1**
(45) Veröffentlichungstag und Bekanntmachung des Hinweises auf die Patenterteilung: **13.10.2021**
(21) Anmeldenummer: 18213881.8
(22) Anmeldetag: 19.12.2018
(51) Int. Cl.: B62B 3/02, B62B 3/16, B62B 3/00, B62B 5/00

(54) **ROLLWAGEN**
TROLLY
CHARIOT

(30) Priorität: 22.12.2017 CH 16132017
(43) Veröffentlichungstag der Anmeldung: 26.06.2019
(73) Patentinhaber: Stebler Holding AG, 3011 Bern (CH)
(72) Erfinder: Stebler, Markus, 3011 Bern (CH); Tinz, Bernhard, 72770 Reutlingen (DE)
(74) Vertreter: P&TS SA (AG, Ltd.)

(56) Entgegenhaltungen:
- EP-A1- 2 570 361
- WO-A1-2014/059453
- DE-U1- 29 605 525
- US-A- 5 310 071
- US-A1- 2007 158 347

## Beschreibung

### Technisches Gebiet

Die Erfindung bezieht sich auf einen modular einsetzbaren Rollwagen.

### Stand der Technik

Rollwagen werden in vielen Industriebetrieben eingesetzt. Diese Rollwagen dienen zum Beispiel zum Lagern und Transportieren von Werkzeug. WO2014/059453 offenbart zwei Führungsausnehmungen an einer ersten lateralen Seite und zwei Führungsvorsprünge an einer zweiten lateralen Seite des Rollwagens, um so mehrere Rollwägen koppeln zu können. US2007/0158347 offenbart Kisten, die horizontal und vertikal gestapelt werden können und durch eine Stapelstruktur stabilisiert werden.

### Darstellung der Erfindung

Es ist eine Aufgabe der Erfindung, einen Rollwagen zu finden, der vielseitig und modular einsetzbar ist.

Erfindungsgemäss wird diese Aufgabe durch einen Rollwagen nach Anspruch 1 gelöst.

Durch die Verwendung von mindestens einer Funktionsschiene kann der Rollwagen durch modulare Funktionselemente erweitert werden, die in die Funktionsschiene des Rollwagens gesteckt werden können. Die distale und laterale Führungsausnehmung jeder Funktionsschiene erlaubt die Schienenkante sowohl zur Funktionserweiterung auf der lateralen und/oder auf der distalen Seite zu verwenden.

Erfindungsgemäss wird diese Aufgabe weiter durch ein Rollwagenset gelöst aufweisend einen oben genannten Rollwagen und ein Funktionselement.

Weitere vorteilhafte Ausführungsformen sind in den abhängigen Ansprüchen angegeben.

In einem Ausführungsbeispiel weist die laterale Führungsausnehmung die gleiche Form oder den gleichen Querschnitt wie die distale Führungsausnehmung auf. Vorzugsweise weist die laterale Führungsausnehmung einen Querschnitt oder eine Form auf, der/die 90° verdreht zu dem Querschnitt oder der Form der distalen Führungsausnehmung derselben Funktionsschiene ist. Vorzugsweise weist die laterale Führungsausnehmung eine Führungsöffnung auf der lateralen Seite der Schienenkante und die distale Führungsausnehmung eine Führungsöffnung auf der distalen Seite der Schienenkante auf. Vorzugsweise weist die laterale und die distale Führungsausnehmung jeweils mindestens auf einer lateralen Seite, die der lateralen Seite der Schienenkante benachbart ist, eine Einführungsöffnung zum Einführen von Funktionselementen in die Führungsöffnung auf. Vorzugsweise weisen die laterale und die distale Führungsausnehmung jeweils einen Querschnitt auf, der sich von der Führungsöffnung nach innen verbreitert, so dass ein in die Führungsöffnung eingeführtes Funktionselement nicht in Richtung der Führungsöffnung aus der Führungsausnehmung genommen werden kann. Vorzugsweise weisen die laterale und die distale Führungsausnehmung jeweils auf zwei lateralen Seiten, die der lateralen Seite der Schienenkante benachbart sind, die Einführungsöffnung zum Einführen von Funktionselementen in die Führungsöffnung auf. Vorzugsweise weist die laterale und die distale Führungsausnehmung an jeder der mindestens einen Einführungsöffnung einen Befestigungsmechanismus zum Befestigen eines in die Führungsausnehmung eingeführten Führungselements auf. Vorzugsweise ist der Befestigungsmechanismus eine Schraube, deren Schraubenkopf teilweise auf der der lateralen Seite der Schienenkante benachbarten lateralen Seite hervorsteht, um betätigt werden zu können, und/oder deren Schraubrichtung parallel zu der der lateralen Seite der Schienenkante benachbarten lateralen Seite ist. Vorzugsweise ist die Schraubrichtung der Schraube der lateralen Führungsausnehmung parallel zu der lateralen Seite der Schienenkante ist und die Schraubrichtung der Schraube der distalen Führungsausnehmung parallel zu der distalen Seite der Schienenkante.

In einem Ausführungsbeispiel sind vier Funktionsschienen an vier Schienenkanten angeordnet. Dies erlaubt, zwei oder mehr Rollwägen mittels Funktionselementen zu beliebig größeren Rollwagensets zu koppeln.

In einem Ausführungsbeispiel weist die mindestens eine Funktionsschiene mindestens zwei Funktionsschienen auf, die parallel zueinander angeordnet sind. Vorzugsweise weist die mindestens eine Funktionsschiene eine erste Funktionsschiene an einer ersten Schienenkante und eine zweite Funktionsschiene an einer zweiten Schienenkante auf, wobei die erste Schienenkante zwischen der zweiten distalen Seite und einer ersten lateralen Seite angeordnet ist, wobei die zweite Schienenkante zwischen der zweiten distalen Seite und einer zweiten lateralen Seite angeordnet ist, wobei die zweite laterale Seite der ersten lateralen Seite gegenüberliegt. Vorzugsweise weist die mindestens eine Funktionsschiene eine dritte Funktionsschiene an einer dritten Schienenkante und eine vierte Funktionsschiene an einer vierten Schienenkante auf, wobei die dritte Schienenkante zwischen der ersten distalen Seite und der ersten lateralen Seite angeordnet ist, wobei die vierte Schienenkante zwischen der ersten distalen Seite und der zweiten lateralen Seite angeordnet ist.

In einem Ausführungsbeispiel weist der Rollmechanismus vier Rollen auf, die an den vier Ecken der ersten distalen Seite befestigt sind.

In einem Ausführungsbeispiel ist der Rollmechanismus entfernbar auf der ersten distalen Seite befestigt.

In einem Ausführungsbeispiel ist der Rollmechanismus in der dritten und vierten Funktionsschiene entfernbar befestigt.

In einem Ausführungsbeispiel ist der Rollmechanismus in den distalen Führungsausnehmungen der dritten und vierten Funktionsschiene entfernbar befestigt.

In einem Ausführungsbeispiel weist die mindestens eine Funktionsschiene eine erste Funktionsschiene an einer ersten Schienenkante, eine zweite Funktionsschiene an einer zweiten Schienenkante, eine dritte Funktionsschiene an einer dritten Schienenkante und eine vierte Funktionsschiene an einer vierten Schienenkante auf, wobei die erste Schienenkante zwischen der zweiten distalen Seite und einer ersten lateralen Seite angeordnet ist, wobei die zweite Schienenkante zwischen der zweiten distalen Seite und einer zweiten lateralen Seite angeordnet ist, wobei die zweite laterale Seite der ersten lateralen Seite gegenüberliegt, wobei die dritte Schienenkante zwischen der ersten distalen Seite und der ersten lateralen Seite angeordnet ist, wobei die vierte Schienenkante zwischen der ersten distalen Seite und der zweiten lateralen Seite angeordnet ist, wobei die erste Funktionsschiene eine erste laterale Führungsausnehmung an der ersten lateralen Seite und eine erste distale Führungsausnehmung an der zweiten distalen Seite aufweist, wobei die zweite Funktionsschiene eine zweite laterale Führungsausnehmung an der zweiten lateralen Seite und eine zweite distale Führungsausnehmung an der zweiten distalen Seite aufweist, wobei die dritte Funktionsschiene eine dritte laterale Führungsausnehmung an der ersten lateralen Seite und eine dritte distale Führungsausnehmung an der ersten distalen Seite aufweist, wobei die vierte Funktionsschiene eine vierte laterale Führungsausnehmung an der zweiten lateralen Seite und eine vierte distale Führungsausnehmung an der ersten distalen Seite aufweist.

In einem Ausführungsbeispiel ist das Funktionselement eine Abdeckung zur Abdeckung der zweiten distalen Seite ist, wobei die Abdeckung in der ersten und/oder zweiten Funktionsschiene befestigt ist, wobei die Abdeckung einen Öffnungsmechanismus aufweist.

In einem Ausführungsbeispiel weist das Funktionselement an einer ersten Seite ein erstes männliches Führungselement auf, das ausgebildet ist, in eine der Führungsausnehmungen der Funktionsschienen des ersten Rollwagens eingeführt und darin gehalten zu werden.

In einem Ausführungsbeispiel ist das Funktionselement ein Verbindungselement, das an einer zweiten Seite ein zweites männliches Führungselement aufweist, das ausgebildet ist, in eine der Führungsausnehmungen der Funktionsschienen des ersten Rollwagens eingeführt und darin gehalten zu werden.

In einem Ausführungsbeispiel weist das Rollwagenset einen zweiten Rollwagen mit den vier Führungsschienen auf, wobei das Verbindungselement ausgebildet ist, auf einer ersten Seite in eine der Führungsausnehmung des ersten Rollwagens befestigt zu werden und auf einer zweiten Seite in eine der Führungsausnehmungen des zweiten Rollwagens befestigt zu werden, so dass der erste Rollwagen und der zweite Rollwagen über das Verbindungselement gekoppelt sind.

In einem Ausführungsbeispiel weist das Rollwagenset ein zweites Verbindungselement auf, wobei das Rollwagenset ausgebildet ist, in den folgenden Zuständen gekoppelt werden kann: In einem ersten Koppelungszustand wird die erste oder zweite laterale Führungsausnehmung des ersten Rollwagens über das erste Verbindungselement mit der ersten oder zweiten lateralen Führungsausnehmung des weiteren Rollwagens gekoppelt und die dritte oder vierte laterale Führungsausnehmung des ersten Rollwagens über das das zweite Verbindungselement mit der dritten oder vierten lateralen Führungsausnehmung des zweiten Rollwagens gekoppelt. In einem zweiten Koppelungszustand wird die erste distale Führungsausnehmung des ersten Rollwagens über das erste Verbindungselement mit der dritten distalen Führungsausnehmung des zweiten Rollwagens gekoppelt und die zweite distale Führungsausnehmung des ersten Rollwagens über das zweite Verbindungselement mit der vierten distalen Führungsausnehmung des zweiten Rollwagens gekoppelt.

Alle Ausführungsbeispiele können miteinander kombiniert werden.

### Kurze Beschreibung der Figuren

Die Erfindung wird anhand der beigefügten Figuren näher erläutert, wobei zeigen
- **Fig. 1**: eine dreidimensionale Ansicht eines Ausführungsbeispiels eines Rollwagens,
- **Fig. 2**: eine erste Seitenansicht des Rollwagens aus Fig. 1.
- **Fig. 3**: eine zweite Seitenansicht des Rollwagens aus Fig. 1.
- **Fig. 4**: eine Seitenansicht eines ersten Ausführungsbeispiels einer Funktionsschiene.
- **Fig. 5**: eine Seitenansicht eines zweiten Ausführungsbeispiels einer Funktionsschiene.
- **Fig. 6**: ein Koppelungszustand eines Ausführungsbeispiels eines Rollwagensets mit drei Rollwägen.
- **Fig. 7A**: eine dreidimensionale Ansicht einer Vergrößerung des Ausschnitts VII der Fig. 6.
- **Fig. 7B**: eine Seitenansicht der Vergrößerung des Ausschnitts VII der Fig. 6.
- **Fig. 8**: eine Seitenansicht einer Vergrößerung des Ausschnitts VIII der Fig. 6.
- **Fig. 9A**: eine dreidimensionale Ansicht eines Ausführungsbeispiels eines Funktionselements.
- **Fig. 9B**: eine Seitenansicht mit dem Querschnitt des Funktionselements aus Fig. 9A.
- **Fig. 10**: ein Koppelungszustand eines Ausführungsbeispiels eines Rollwagensets mit zwei Rollwägen und einem Verbindungstisch.
- **Fig. 11**: eine dreidimensionale Ansicht einer Vergrößerung des Ausschnitts XI der Fig. 10.
- **Fig. 12**: einen Rollwagen mit einer Abdeckung als Funktionselement.
- **Fig. 13**: einen ersten Öffnungsmechanismus für die Abdeckung aus Fig. 12.
- **Fig. 14**: einen ersten Öffnungszustand eines zweiten Öffnungsmechanismus für die Abdeckung aus Fig. 12.
- **Fig. 15**: einen zweiten Öffnungszustand eines zweiten Öffnungsmechanismus für die Abdeckung aus Fig. 12.

### Wege zur Ausführung der Erfindung

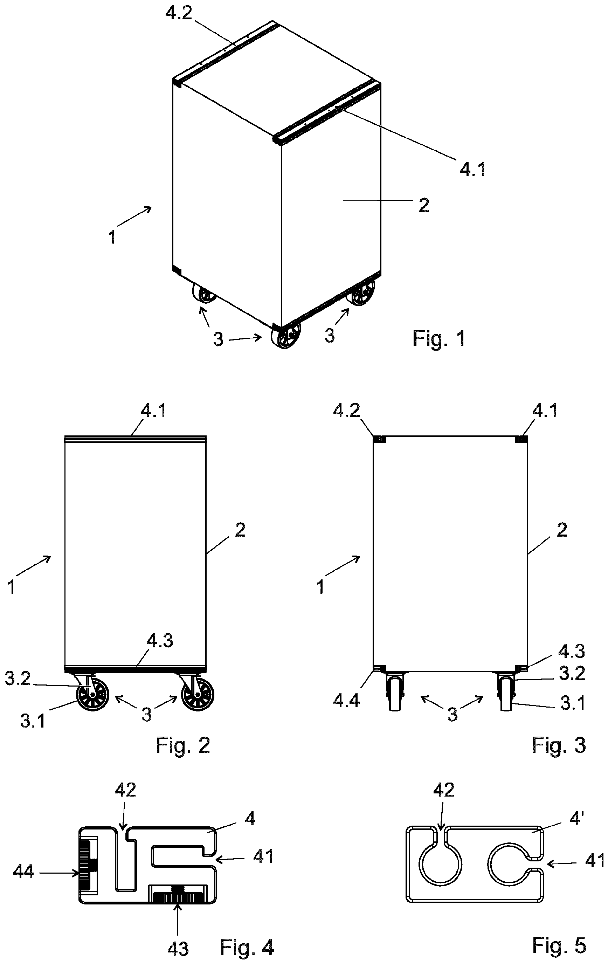

Fig. 1 bis 3 zeigen ein Ausführungsbeispiel eines Rollwagens.

Der Rollwagen 1 weist ein Wagengehäuse 2 und einen Rollmechanismus 3 auf.

Das Wagengehäuse 2 weist vorzugsweise eine erste distale Seite und eine der ersten distalen Seite gegenüberliegende zweite distale Seite auf. Das Wagengehäuse 2 weist vorzugsweise eine erste laterale Seite und eine der ersten lateralen Seite gegenüberliegende zweite laterale Seite, eine dritte laterale Seite und eine der dritten Seite gegenüberliegende vierte laterale Seite auf. Die Begriffe "distal" und "lateral" sollen nichts über die Form des Wagengehäuses 2 aussagen, sondern soll nur als begriffliche Abgrenzung zwischen lateralen Seiten und distalen Seiten verwendet werden. Die erste distale Seite ist in der Regel die untere Seite und die zweite distale Seite ist in der Regel die obere Seite. Allerdings kann dies auch vertauscht werden. Die erste distale Seite ist vorzugsweise parallel zu der zweiten distalen Seite. Die erste und zweite laterale Seite sind vorzugsweise parallel angeordnet. Die dritte und vierte laterale Seite sind vorzugsweise parallel angeordnet. Die erste und/oder zweite laterale Seite ist vorzugsweise rechtwinkelig zu der dritten und/oder vierten lateralen Seite angeordnet. Die erste und/oder zweite laterale Seite ist vorzugsweise rechtwinkelig zu der ersten und/oder zweiten distalen Seite angeordnet. Die dritte und/oder vierte laterale Seite ist vorzugsweise rechtwinkelig zu der ersten und/oder zweiten distalen Seite angeordnet. Vorzugsweise bildet das Wagengehäuse einen Quader aus, d.h. die sechs Seiten stehen senkrecht aufeinander. Allerdings wären auch andere Formen möglich. Insbesondere die dritte und vierte laterale Seite können beliebige Formen aufweisen. Die lateralen Seiten und/oder die distalen Seiten können offen oder geschlossen ausgebildet werden. Vorzugsweise sind aber zumindest zwei Seiten, vorzugsweise zumindest drei Seiten, vorzugsweise zumindest vier Seiten, vorzugsweise zumindest fünf Seiten durch eine Wand verschlossen. Vorzugsweise weist das Wagengehäuse 2 zumindest eine Seite auf, die offen ist oder mittels einer Tür Zugang zum inneren des Wagengehäuses 2 erlaubt. Im Inneren des Wagengehäuses können zum Beispiel Werkzeuge, Funktionselemente, etc. gelagert werden.

Zur einfacheren Beschreibung des Rollwagens, werden drei Richtungen definiert. Eine erste Richtung verläuft von der dritten lateralen Seite zu der vierten lateralen Seite und/oder ist parallel zu der ersten und/oder zweiten lateralen Seite und/oder zu der ersten und/oder zweiten distalen Seite und/oder ist rechtwinkelig zu der dritten und/oder vierten lateralen Seite. Eine zweite Richtung verläuft von der ersten lateralen Seite zu der zweiten lateralen Seite und/oder ist parallel zu der dritten und/oder vierten lateralen Seite und/oder zu der ersten und/oder zweiten distalen Seite und/oder ist rechtwinkelig zu der ersten und/oder zweiten lateralen Seite. Eine dritte Richtung verläuft von der ersten distalen Seite zu der zweiten distalen Seite und/oder ist parallel zu der ersten, zweiten, dritten und/oder vierten lateralen Seite und/oder ist rechtwinkelig zu der ersten und/oder zweiten distalen Seite.

Das Wagengehäuse 2 weist vorzugsweise mindestens eine Funktionsschiene 4 auf. Die Funktionsschiene 4 ist vorzugsweise an einer Kante zwischen zwei Seiten des Wagengehäuses 2 angeordnet. Eine solche Kante wird nachfolgend Schienenkante genannt. Vorzugsweise ist die mindestens eine Schienenkante mit einer Funktionsschiene 4 jeweils zwischen einer der distalen und einer der lateralen Seite angeordnet. Die laterale Seite, die an die Schienenkante angrenzt und die mit der distalen Seite die Schienenkante ausbildet, wird hier als die laterale Seite der Schienenkante bezeichnet. Die distale Seite, die an die Schienenkante angrenzt und die mit der lateralen Seite die Schienenkante ausbildet, wird hier als die distale Seite der Schienenkante bezeichnet. Vorzugsweise weist das Wagengehäuse 2 eine erste Funktionsschiene 4.1 an einer ersten Schienenkante, eine zweite Funktionsschiene 4.2 an einer zweiten Schienenkante, eine dritte Funktionsschiene 4.3 an einer dritten Schienenkante und eine vierte Funktionsschiene 4.4 an einer vierten Schienenkante auf. Vorzugsweise sind die vier Schienenkanten parallel angeordnet. Die erste Schienenkante ist vorzugsweise zwischen der zweiten distalen Seite und der ersten lateralen Seite angeordnet. Die zweite Schienenkante ist vorzugsweise zwischen der zweiten distalen Seite und der zweiten lateralen Seite angeordnet. Die dritte Schienenkante ist vorzugsweise zwischen der ersten distalen Seite und der ersten lateralen Seite angeordnet. Die vierte Schienenkante ist vorzugsweise zwischen der ersten distalen Seite und der zweiten lateralen Seite angeordnet. Allerdings wäre es auch möglich weniger (eine, zwei oder drei) oder mehr als vier Funktionsschienen in dem Wagengehäuse 2 anzuordnen. Die Schienenkanten verlaufen vorzugsweise parallel und/oder vorzugsweise entlang der ersten Richtung.

Ein Ausführungsbeispiel der Führungsschienen 4 ist in Fig. 4 gezeigt. Die Funktionsschiene 4 weist mindestens eine Führungsausnehmung 41, 42 aus. Jede der mindestens einen Führungsausnehmung 41, 42 weist eine weibliche Schnittstelle für die Aufnahme eines männlichen Führungselements eines Funktionselements auf. Vorzugsweise weist die Funktionsschiene 4 eine laterale Führungsausnehmung 41, die an der lateralen Seite der Schienenkante angeordnet ist, und eine distale Führungsausnehmung 42, die an der distalen Seite der Schienenkante angeordnet ist, auf. Vorzugsweise sind die laterale Führungsausnehmung 41 und die distale Führungsausnehmung 42 ausgebildet, ein Funktionselement in die Führungsausnehmung einzuführen und darin zu halten. Dies kann während des Betriebs des Rollwagens 1 und ohne ein Zerlegen des Rollwagens geschehen. Jede Führungsausnehmung 41, 42 weist jeweils mindestens eine Einführungsöffnung auf, durch die das Funktionselement in die Führungsausnehmung eingeführt werden kann. Vorzugsweise weist jede Führungsausnehmung 41, 42 zwei Einführungsöffnungen auf entgegengesetzten Seiten auf. Dadurch kann das Funktionselement von zwei Seiten aus eingeführt werden. Vorzugsweise ist die mindestens eine Einführungsöffnung jeder Führungsausnehmung 41, 42 auf mindestens einer lateralen Seite, die zu der lateralen Seite der Schienenkante benachbart ist/sind. Dadurch ist die Einführung des Funktionselements besonders einfach. Die laterale Führungsausnehmung 41 weist auf der lateralen Seite der Schienenkante eine Führungsöffnung auf. Die laterale Führungsöffnung ist so ausgebildet, dass sich das in die Führungsausnehmung 41 eingeführte Funktionselement durch die Führungsöffnung (in die zweite Richtung) erstrecken kann. Die laterale Führungsöffnung ist so ausgebildet, dass sich das in die Führungsausnehmung 41 eingeführte Funktionselement nicht durch die Führungsöffnung (in die zweite Richtung) herausgenommen werden kann bzw. in der Führungsausnehmung 41 (in der zweiten Richtung) blockiert bleibt. Die distale Führungsausnehmung 42 weist auf der distalen Seite der Schienenkante eine Führungsöffnung auf. Die distale Führungsöffnung ist so ausgebildet, dass sich das in die distale Führungsausnehmung 42 eingeführte Funktionselement durch die distale Führungsöffnung (in die dritte Richtung) erstrecken kann. Die distale Führungsöffnung ist so ausgebildet, dass sich das in die distale Führungsausnehmung 42 eingeführte Funktionselement in der distalen Führungsausnehmung 42 (in der dritten Richtung) blockiert bleibt bzw. nicht durch die Führungsöffnung (in die dritte Richtung) herausgenommen werden kann. So zeigt zum Beispiel die erste Funktionsschiene 4.1, die an der Schienenkante zwischen der zweiten distalen Seite und der ersten lateralen Seite angeordnet ist, auf der zweiten distalen Seite die distale Führungsausnehmung 42 und auf der ersten lateralen Seite die laterale Führungsausnehmung 41. Die Eintrittsöffnungen der Führungsausnehmungen 41 und 42 sind jeweils auf der dritten und/oder vierten lateralen Seite angeordnet. Die distale Führungsöffnung befindet sich auf der zweiten distalen Seite und die laterale Führungsöffnung befindet sich auf der ersten lateralen Seite.

Die distale und die laterale Führungsausnehmung 41, 42 einer Funktionsschiene 4 weisen jeweils eine Führungsrichtung auf, in der das Funktionselement in die Führungsausnehmung 41, 42 eingeführt und herausgeführt werden kann. Die Führungsrichtungen der distalen und die lateralen Führungsausnehmung 41, 42 sind vorzugsweise parallel. Die Führungsrichtung der distalen und/oder der lateralen Führungsausnehmung 41, 42 verläuft/verlaufen vorzugsweise in der ersten Richtung und/oder parallel zu der Schienenkante und/oder parallel zu der lateralen und/oder distalen Seite der Schienenkante. Die Führungsrichtung der distalen und/oder der lateralen Führungsausnehmung 41, 42 entspricht vorzugsweise der Längsachse der distalen und/oder der lateralen Führungsausnehmung 41, 42. Die Funktionselemente sind vorzugsweise so steif und/oder so passend zu den Führungsausnehmungen 41, 42 ausgebildet, so dass die Funktionselement nur in einer Richtung, nämlich der Führungsrichtung, in eine der Funktionsausnehmungen 41, 42 eingeführt werden können.

Die Führungsausnehmungen 41, 42 haben vorzugsweise die gleiche Form oder den gleichen Querschnitt. Die Form oder der Querschnitt der distalen Führungsausnehmung 42 ist vorzugsweise um 90° um die Führungsrichtung bzw. um die erste Richtung zu der (gleichen) Form oder dem (gleichen) Querschnitt der lateralen Führungsausnehmung 41 verdreht ist. Dadurch kann das gleiche Funktionselement auf der distalen Seite oder (um 90° gedreht) auf der lateralen Seite der Funktionsschiene angeordnet werden. Der Querschnitt einer Führungsausnehmung 41, 42 ist dabei ein Schnitt in der Ebene orthogonal zu der Führungsrichtung bzw. zu der ersten Richtung. Die Form oder der Querschnitt der Führungsausnehmung 41, 42 ist so ausgebildet, dass die Führungsöffnung eine Engstelle bildet und die Führungsausnehmung 41, 42 sich danach (zum Wageninneren hin) verbreitert. In dem in Fig. 4 gezeigten Ausführungsbeispiel sind die Querschnitte der Führungsausnehmungen 41, 42 rechteckig ausgebildet. In dem in Fig. 4 gezeigten Ausführungsbeispiel sind die Querschnitte der Führungsausnehmungen 41, 42 rund, insbesondere kreisförmig ausgebildet. Allerdings sind auch andere Querschnittsformen der Führungsausnehmungen 41, 42 denkbar, z.B. quadratisch, dreieckig, ellipsenförmig, usw.. Vorzugsweise erstreckt sich die Führungsausnehmung 41, 42 über die ganze Breite (in der ersten Richtung) der lateralen Seite bzw. der distalen Seite der Schienenkante, d.h. von der benachbarten lateralen Seite auf der einen Seite (hier dritte laterale Seite) zu der benachbarten lateralen Seite auf der anderen Seite (hier vierte laterale Seite). Vorzugsweise verändert sich der Querschnitt der Führungsausnehmung 41, 42 über 90%, vorzugsweise über 100 % der Länge (in der Führungsrichtung) der Führungsausnehmung 41, 42 nicht bzw. bleibt über diese Länge konstant.

Vorzugsweise weist die Funktionsschiene 4 für jede Führungsausnehmung 41, 42 mindestens einen Befestigungsmechanismus 43, 44 auf, der ausgebildet ist, ein in die Führungsaufnehmung 41, 42 eingeführtes Funktionselement darin zu befestigen. Wenn das Funktionselement durch den Befestigungsmechanismus 43, 44 befestigt ist, kann das Funktionselement nicht mehr in der Führungsrichtung aus der Führungsausnehmung 41, 42 herausgeschoben werden. Vorzugsweise weist jede Führungsausnehmung 41, 42 zwei Befestigungsmechanismen 43, 44 auf, einen an jedem Ende der Führungsausnehmung 41, 42. Der Befestigungsmechanismus 43, 44 kann ausgebildet sein, das eingeführte Funktionselement gegen eine Wand der Führungsausnehmung (in eine Richtung rechtwinkelig zu der Führungsrichtung) zu drücken. In Fig. 4 ist ein solcher Befestigungsmechanismus 43, 44 gezeigt, der ein in die laterale Führungsausnehmung 41 eingeführtes Funktionselement in die dritte Richtung und/oder der ein in die distale Führungsausnehmung 42 eingeführtes Funktionselement in die zweite Richtung drückt. Der Befestigungsmechanismus 43, 44 ist vorzugsweise eine Schraube, vorzugsweise eine Rändelschraube. Der Umfang des Schraubenkopfs ist dabei so ausgebildet, dass er teilweise auf der lateralen Seite der Einführungsöffnung der Führungsausnehmung 41, 42 hervorsteht und so betätigt werden kann. Allerdings sind auch andere oder keine Befestigungsmechanismen möglich.

Die Funktionsschienen 4 haben vorzugsweise einen rechteckigen Querschnitt, da die distale Führungsausnehmung 42 nach innen (in die zweite Richtung) versetzt hinter der lateralen Führungsausnehmung 41 angeordnet ist. Allerdings wäre es auch möglich die Führungsausnehmungen anders anzuordnen und/oder die Funktionsschienen 4 mit einem anderen Querschnitt auszubilden.

Vorzugsweise sind alle Funktionsschienen 4 mit den gleichen distalen und lateralen Führungsschienen 41, 42 versehen, so dass jedes Funktionselement auf vier Seiten (mit Schienenkanten) befestigt werden können. Jede der vier Seiten mit Schienenkanten weist an zwei gegenüberliegenden Kanten eine Führungsausnehmung 41, 42 auf. Die erste laterale Seite weist an den beiden Schienenkanten jeweils eine laterale Führungsausnehmung 41 auf. Die zweite laterale Seite weist an den beiden Schienenkanten jeweils eine laterale Führungsausnehmung 41 auf. Die erste distale Seite weist an den beiden Schienenkanten jeweils eine distale Führungsausnehmung 42 auf. Die zweite distale Seite weist an den beiden Schienenkanten jeweils eine distale Führungsausnehmung 42 auf.

Es wäre auch möglich, die Schienenkante zwischen zwei benachbarten lateralen Seiten anzuordnen. In diesem Fall würde die Schienenkante zwischen zwei lateralen Seiten angeordnet und die Führungsschiene 42 würde auf der zweiten lateralen Seite angeordnet sein.

Im Folgenden werden die Seiten des Rollwagens 1, die mindestens eine Schienenkante, vorzugsweise zwei Schienenkanten ausbilden, als Verbindungsseiten bezeichnet. In dem gezeigten Ausführungsbeispiel sind die vier Verbindungsseiten die erste und zweite distale Seite und die erste und zweite laterale Seite, die jeweils eine Führungsausnehmung 41 oder 42 an den beiden Schienenkanten aufweisen.

Der Rollmechanismus ist an der ersten distalen Seite des Wagengehäuses 2 angeordnet und ausgebildet, die Position des Rollwagen 1 durch Rollen zu verschieben. Die erste distale Seite ist dabei definiert durch die Seite des Rollwagengehäuses 2, auf der der Rollmechanismus befestigt ist. Vorzugsweise weist der Rollmechanismus eine Mehrzahl an Rollen 3.1 auf. Vorzugsweise weist der Rollmechanismus vier Rollen 3.1 an den vier Ecken der ersten distalen Seite auf. Die Rolle 3.1 ist in einer Rollhalterung 3.2 um eine Rollachse drehbar gelagert. Die Rollachse ist dabei parallel zu der ersten und/oder zweiten distalen Seite. Die Drehung der Rolle 3.1 um die Rollachse erlaubt ein reibungsloses Fortbewegen des Rollwagens. Vorzugsweise ist erlaubt die Rollhalterung 3.2 zumindest einer Rolle 3.1, vorzugsweise von zwei oder vier Rollen 3.1, eine Drehung um eine Drehachse, die in die dritte Richtung verläuft. Dadurch wird das Lenken des Rollwagens 1 erleichtert.

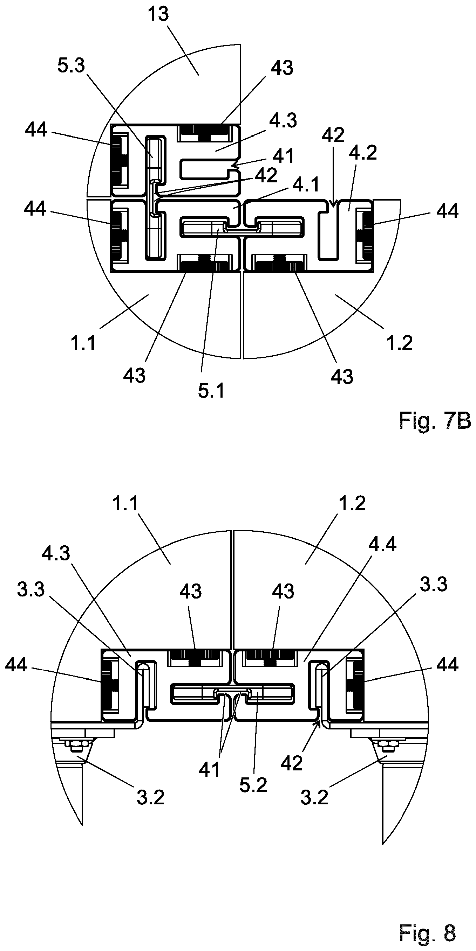

Der Rollmechanismus ist abnehmbar an der ersten distalen Seite befestigt. Vorzugsweise wird hierzu der Rollmechanismus an der dritten und/oder vierten Funktionsschiene 4.3, 4.4, vorzugsweise an dessen/deren distaler Führungsausnehmung 42 befestigt. Der Rollmechanismus stellt somit eines der Funktionselemente dar, das modular an dem Wagengehäuse 2 befestigt werden kann. Der Rollmechanismus weist mindestens ein männliches Führungselement 3.3, vorzugsweise mindestens zwei männliche Führungselemente 3.3 auf, das/die in die dritte und/oder vierte Funktionsschiene 4.3, 4.4, insbesondere in dessen/deren distale Führungsausnehmung(en) 42 zur Befestigung eingeführt werden können (siehe Fig. 8). Hierzu wird der Rollmechanismus mit dessen mindestens einem männlichen Führungselement 3.3 einfach von der dritten und/oder vierten lateralen Seite in die Einführungsöffnung der Führungsausnehmung 42 geschoben und evtl. mit dem Befestigungsmechanismus 44 blockiert.

Die Rollen 3.1 und deren Rollenhalterungen 3.2 können pro Rolle 3.1 ein einzelnes Element ausbilden, das einzeln an der ersten distalen Seite befestigbar ist. Allerdings ist es auch möglich, dass alle Rollen oder Untermengen der Rollen, z. B. Rollenpaare, auf einem gemeinsamen Rahmen befestigt sind und somit gemeinsam an der ersten distalen Seite befestigbar sind. In dem gezeigten Ausführungsbeispiel sind die Rollen 3.1 bzw. deren Halterung 3.2 jeweils mit einem männlichen Führungselement 3.3 zur Befestigung der Rolle 3.1 in der Führungsausnehmung 42 versehen. Wenn zwei Rollen 3.1 an gegenüberliegenden Enden einer Funktionsschiene 4 an einem gemeinsamen Rahmen befestigt sind, können diese gegenüberliegenden Rollen 3.1 auch eine gemeinsame männliche Führungsschiene 3.3 ausbilden, die sich über die ganze Länge der Führungsausnehmung 42 erstreckt. Dies verbessert die Stabilität der Befestigung der Rollen 3.1.

Der Rollmechanismus 3 kann somit von dem Wagengehäuse 2 entfernt werden, so dass nur das Wagengehäuse 2 ohne den Rollmechanismus 3 verwendet werden kann. Ein Anwendungsbeispiel wird nachfolgend beschrieben. Der Rollmechanismus 3 kann mittels der vier Funktionsschienen 4.1 bis 4.4 an vier Seiten des Wagengehäuses 2 befestigt werden, d.h. an der ersten distalen Seite, der zweiten distalen Seite, der ersten lateralen Seite oder der zweiten lateralen Seite. Per Definition soll aber dann die Bezeichnung der Seiten entsprechend so wechseln, dass die Seite mit dem befestigten Rollmechanismus 3 der ersten distalen Seite entspricht. Wird der Rollmechanismus 3 zum Beispiel an der ersten lateralen Seite befestigt, so wird die erste laterale Seite zur ersten distalen Seite, die erste und zweite distale Seite werden zur ersten und zweiten lateralen Seite und die zweite laterale Seite wird zur zweiten distalen Seite.

Ein Rollwagenset weist nun mindestens einen Rollwagen 1 und eine Funktionselement auf.

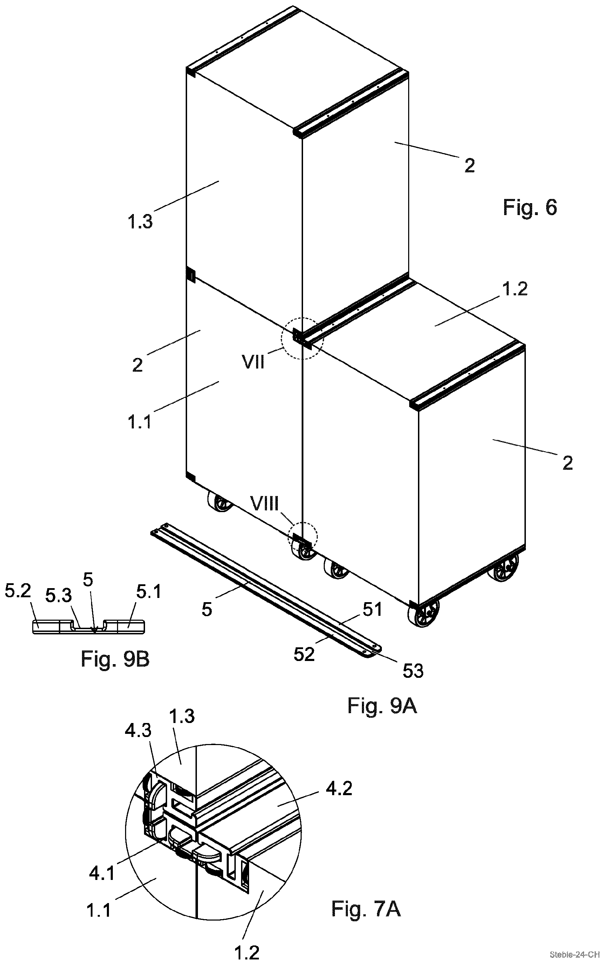

Ein Rollwagenset weist zusätzlich ein Funktionsobjekt mit mindestens Führungsausnehmung 41, 42, vorzugsweise einer Funktionsschiene 4, wie sie oben beschrieben wurde, auf. Das Funktionselement ist als Verbindungselement 5 ausgeführt, das das Funktionsobjekt über das Verbindungselement 5 mit dem Rollwagengehäuse 2 koppelt. Fig. 9A und 9B zeigen ein Ausführungsbeispiel eines solchen Verbindungselements 5. Das Verbindungselement weist ein erstes männliches Führungselement 51 und ein zweites männliches Führungselement 52 auf, die über einen Verbindungssteg 53 verbunden sind. Das erste und das zweite Führungselement 51, 52 sind ausgebildet, in eine Führungsausnehmung 41 der Funktionsschienen 4 des Rollwagens 1 und/oder in eine Führungsausnehmung des Funktionsobjekts eingeführt zu werden. Das erste und/oder zweite Führungselement 51, 52 weisen eine Führungsrichtung auf, in die das entsprechende Führungselement 51, 52 in eine der genannten Führungsausnehmung (parallel zu dessen Führungsrichtung) eingeführt werden kann. Die Führungsrichtung des Führungselements 51, 52 entspricht vorzugsweise dessen Längsachse. Die Führungselemente 51, 52 haben vorzugsweise eine Länge, die grundsätzliche der Länge der genannten Führungsausnehmungen 41, 42 entspricht. Vorzugsweise ist sind die Führungselemente 51, 52 etwas länger als die Führungsausnehmungen 41, 42, so dass die eingeführten Führungselemente 51, 52 immer etwas aus der Führungsausnehmung herausstehen und somit jederzeit entfernt werden können. Vorzugsweise sind die Führungsrichtungen des ersten und zweiten Führungselements 51, 52 parallel zueinander angeordnet. Der Querschnitt der Führungselemente 51, 52 entspricht vorzugsweise dem Querschnitt einer Führungsausnehmung 41, 42 der Funktionsschiene 4 des Rollwagens 1. Der Querschnitt des Führungselements 51, 52 ist dabei der Schnitt durch eine Ebene des Verbindungselements rechtwinkelig zur Führungsrichtung des Führungselements 51, 52. Das erste und das zweite Führungselement 51, 52 sind somit dicker als der Verbindungssteg 53 (zumindest im Bereich des Verbindungsstegs 53, der sich durch die Führungsöffnung der genannten Führungsausnehmungen 41, 42 erstreckt. Vorzugsweise ist das Verbindungselement 5 so ausgebildet, dass, wenn die Führungsschienen 4 bzw. die Führungsausnehmungen des Rollwagens 1 und des Funktionsobjekts mit dem Verbindungselement 5 gekoppelt sind, die Führungsschienen 4 bzw. die Führungsausnehmungen des Rollwagens 1 und des Funktionsobjekts einen Abstand von weniger als 5 cm, vorzugsweise von weniger als 3 cm, vorzugsweise von weniger als 1 cm, vorzugsweise von weniger als 0,5 cm aufweisen, vorzugsweise aneinander anliegen.

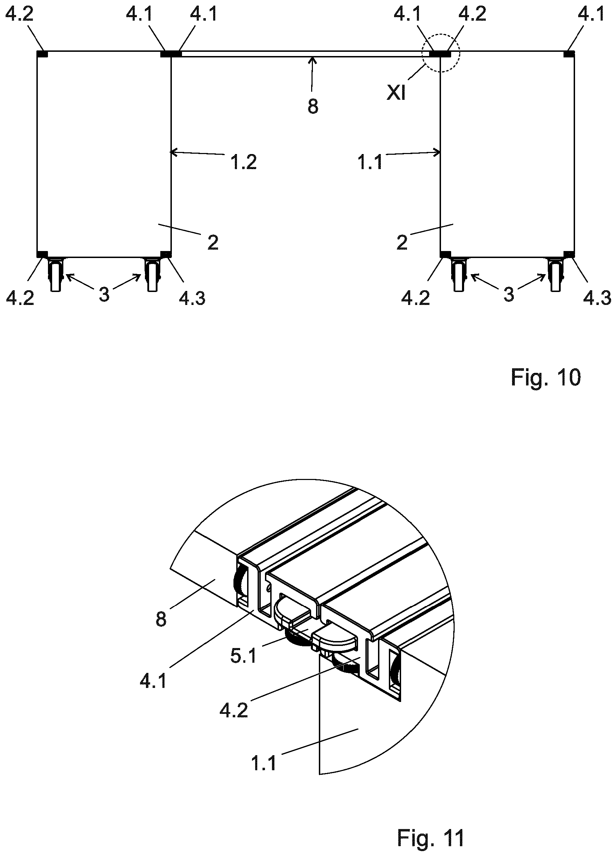

Das Funktionsobjekt kann zum Beispiel ein weiterer Rollwagen 1 (siehe Fig. 6 bis 8) oder eine Tischplatte 8 zwischen zwei Rollwägen 1 sein (siehe Fig. 10 und 11).

Fig. 6 bis 8 zeigen nun ein Ausführungsbeispiel eines möglichen Rollwagensets. Dieses Rollwagenset weist mindestens zwei Rollwägen, hier einen ersten Rollwagen 1.1, einen zweiten Rollwagen 1.2 und einen dritten Rollwagen 1.3, und mindestens zwei Verbindungselemente 5, hier ein erstes Verbindungselement 5.1, ein zweites Verbindungselement 5.2, ein drittes Verbindungselement 5.3 und ein viertes Verbindungselement (nicht gezeigt), auf. Die mindestens zwei Rollwägen sind vorzugsweise gleich ausgeführt. Die mindestens zwei Verbindungselemente 5 sind vorzugsweise gleich ausgeführt.

Zwei Rollwägen 1 können nun mit zwei Verbindungselementen 5 an einer Verbindungsseite gekoppelt werden. Dazu werden die zwei Rollwägen 1 so angeordnet, dass sich die Verbindungsseite des ersten Rollwagens gegenüber der Verbindungsseite des zweiten Rollwagens steht. Durch Einführung der zwei Verbindungselemente 5 in die Funktionsschienen 4 der Verbindungsseiten der zwei Rollwägen 1, können die beiden Rollwägen 1 miteinander gekoppelt werden. Dadurch entsteht ein gekoppelter Rollwagen mit mindestens der doppelten Breite oder ein gekoppelter Rollwagen mit mindestens der doppelten Höhe. Vorzugsweise ist das Verbindungselement 5 so ausgebildet, dass, wenn die beiden Rollwägen 1 mit mindestens einem Verbindungselement 5 gekoppelt sind, die Verbindungsseiten der gekoppelten Rollwägen 1 einen Abstand von weniger als 5 cm, vorzugsweise von weniger als 3 cm, vorzugsweise von weniger als 1 cm, vorzugsweise von weniger als 0,5 cm aufweisen, vorzugsweise aneinander anliegen.

Der erste Rollwagen 1.1 und der zweite Rollwagen 1.2 sind hier mit deren lateralen Verbindungsseiten gekoppelt, hier die erste laterale Seite des ersten Rollwagens 1.1 mit der zweiten lateralen Seite des zweiten Rollwagens 1.2. Dazu wird das erste Verbindungselement 5.1 in die erste Funktionsschiene 4.1 des ersten Rollwagens 1.1, insbesondere in deren laterale Führungsausnehmung 41, und in die zweite Funktionsschiene 4.2 des zweiten Rollwagens 1.2, insbesondere in deren laterale Führungsausnehmung 41, geschoben. Weiterhin wird das zweite Verbindungselement 5.2 in die dritte Funktionsschiene 4.3 des ersten Rollwagens 1.1, insbesondere in deren laterale Führungsausnehmung 41, und in die vierte Funktionsschiene 4.4 des zweiten Rollwagens 1.2, insbesondere in deren laterale Führungsausnehmung 41, geschoben. Dadurch wird eine sehr stabile Koppelung der beiden Rollwägen 1.1 und 1.2 erreicht und/oder ein gekoppelter Rollwagen doppelter Breite geschaffen. Der gekoppelte Rollwagen läuft vorzugsweise auf acht Rollen 3, so dass die Last des Rollwagengehäuses 2 auf eine Rolle 3 nicht zu gross wird. Allerdings könnte man auch zwei oder vier der mittleren Rollen 3 eines so gekoppelten Rollwagens entfernen.

Der erste Rollwagen 1.1 und der dritte Rollwagen 1.3 sind hier mit deren distalen Verbindungsseiten gekoppelt, hier die zweite distale Seite des ersten Rollwagens 1.1 mit der ersten distalen Seite des dritten Rollwagens 1.3. Dazu wird das dritte Verbindungselement 5.3 in die erste Funktionsschiene 4.1 des ersten Rollwagens 1.1, insbesondere in deren distale Führungsausnehmung 42, und in die dritte Funktionsschiene 4.3 des dritten Rollwagens 1.3, insbesondere in deren distale Führungsausnehmung 42, geschoben. Weiterhin wird das vierte Verbindungselement in die zweite Funktionsschiene 4.2 des ersten Rollwagens 1.1, insbesondere in deren distale Führungsausnehmung 41, und in die vierte Funktionsschiene 4.4 des dritten Rollwagens 1.3, insbesondere in deren distale Führungsausnehmung 42, geschoben. Dadurch wird eine sehr stabile Koppelung der beiden Rollwägen 1.1 und 1.3 erreicht und/oder ein gekoppelter Rollwagen doppelter Höhe geschaffen. Vorzugsweise wird der Rollmechanismus eines der beiden Rollwägen 1.1 und 1.3 bei einer Koppelung an distalen Seiten entfernt, da dann einer der Rollwägen 1.1 und 1.3, der keinen Bodenkontakt hat, keinen Rollmechanismus 3 benötigt. Allerdings wäre es auch möglich zwei zweite distale Seiten zu koppeln und den Rollmechanismus oben auf der ersten distalen Seite zu belassen. Alternativ wäre es auch möglich, die Verbindungselemente 5 so auszubilden, dass die Führungselemente 51 und 52 so beabstandet sind, dass die zweite distale Seite des ersten Rollwagens 1.1 mit der ersten distalen Seite des dritten Rollwagens 1.3 gekoppelt werden kann ohne den Rollmechanismus 3 zu entfernen.

In dem gezeigten Ausführungsbeispiel ist der erste Rollwagen 1.1 lateral mit dem zweiten Rollwagen 1.2 und distal mit dem dritten Rollwagen 1.3 gekoppelt, so dass ein gekoppeltes Rollwagenset aus drei Rollwägen entsteht. Es ist ersichtlich, wie durch diesen Rollwagen mit dem Verbindungselement 5 beliebig grosse Rollwagensets zusammengesetzt werden können. Durch ein Verbindungselement doppelter Länge könnte man auch eine Koppelung zweier Rollwägen an der dritten oder vierten lateralen Seite der Rollwägen erreichen.

Fig. 10 und 11 zeigen ein weiteres Ausführungsbeispiel eines möglichen Rollwagensets. Dieses Rollwagenset weist zwei Rollwägen, d.h. einen ersten Rollwagen 1.1 und einen zweiten Rollwagen 1.2, zwei Verbindungselemente 5, d.h. ein erstes Verbindungselement 5.1 und ein zweites Verbindungselement (nicht gezeigt), und eine Tischplatte 8 auf. Die zwei Rollwägen 1 sind vorzugsweise gleich ausgeführt. Die zwei Verbindungselemente 5 sind vorzugsweise gleich ausgeführt.

Die Tischplatte 8 weist vorzugsweise zwei distale Seiten (die Seiten mit den grössten Flächen) und vier lateralen Seiten auf. Die Tischplatte 8 ist vorzugsweise rechteckig, so dass die vier lateralen Seiten jeweils rechtwinkelig auf deren benachbarten Seite stehen. Zwei der vier lateralen Seiten weisen eine Führungsausnehmung für das Verbindungselement 5 auf. Vorzugsweise weisen diese zwei lateralen Seiten jeweils eine Funktionsschiene 4 mit einer distalen und einer lateralen Führungsausnehmung wie sie oben beschrieben wurde auf. Die Funktionsschienen 4 bzw. die Führungsausnehmungen sind vorzugsweise an einer ersten lateralen Seite und einer dieser gegenüberliegenden zweiten lateralen Seite angeordnet. Eine erste Funktionsschiene 4 bzw. eine erste Führungsausnehmung auf der ersten lateralen Seite wird mittels einem Verbindungselement 5 mit der ersten oder zweiten Funktionsschiene 4.1, 4.2 des ersten Rollwagens 1.1 verbunden. Bezüglich der Details der Verbindung zweier Funktionsschienen 4 mit einem Verbindungselement 5 wird auf das letzte Ausführungsbeispiel verwiesen. Es ist hier sowohl möglich, die beiden distalen Führungsausnehmungen 42 der beiden Funktionsschienen 4 des ersten Rollwagens 1.1 und der ersten lateralen Seite der Tischplatte zu verbinden, als auch deren laterale Führungsausnehmungen 41 zu verbinden. Die Verbindung mittels der lateralen Führungsausnehmungen 41 hat, wie in Fig. 10 und 11 gezeigt, den Vorteil, dass die (obere) distale Seite der Tischplatte 8 bündig mit der zweiten distalen Seite des ersten Rollwagens 1.1 angeordnet ist und somit eine grosse Tischfläche ausbildet. Analog wird die Funktionsschiene 4 bzw. die Führungsausnehmung auf der zweiten lateralen Seite der Tischplatte 8 mit der ersten oder zweiten Funktionsschiene 4 des zweiten Rollwagens 1.2 mittels des zweiten Verbindungselements gekoppelt. Dadurch kann zwischen zwei Rollwägen einfach ein Arbeitstisch ausgebildet werden. Alternativ wäre es auch möglich anstatt der Führungsausnehmungen bzw. der Funktionsschienen 4 an den zwei lateralen Seiten der Tischplatte direkt männliche Verbindungselemente (wie 51 und 52) anzuordnen, so dass die Tischplatte direkt in die Funktionsschienen 4 der beiden Rollwägen 1.1 und 1.2 geschoben werden kann. Anstatt mit einem zweiten Rollwagen 1.2 könnte die zweite laterale Seite der Tischplatte 8 auch mit einem anderen Objekt, z.B. einer Wand gekoppelt werden. Hierzu müsste nur eine Funktionsschiene 4 oder eine Führungsausnehmung in der richtigen Höhe an der Wand vorgesehen sein.

In den zuvor beschriebenen Ausführungsbeispielen von Rollwagensets wurden hauptsächlich verschiedene Rollwägen 1 miteinander gekoppelt. Es ist aber auch möglich einen Rollwagen durch einen Funktionselement in seiner Funktion zu erweitern. Vorzugsweise kann ein solches Funktionselement einen Aufsatz auf der zweiten distalen Seite sein, das eine bestimmte Funktion erfüllt. Vorzugsweise wird ein solcher Aufsatz in den zwei Funktionsschienen 4.1 und 4.2 der zweiten distalen Seite, insbesondere in deren distalen Führungsausnehmungen befestigt. Dazu weist der Aufsatz vorzugsweise zwei männliche Führungselemente (wie 51 oder 52), die so angeordnet sind, dass sie in die zwei Funktionsschienen 4.1 und 4.2 zur Befestigung an dem Wagengehäuse 2 einführt werden können.

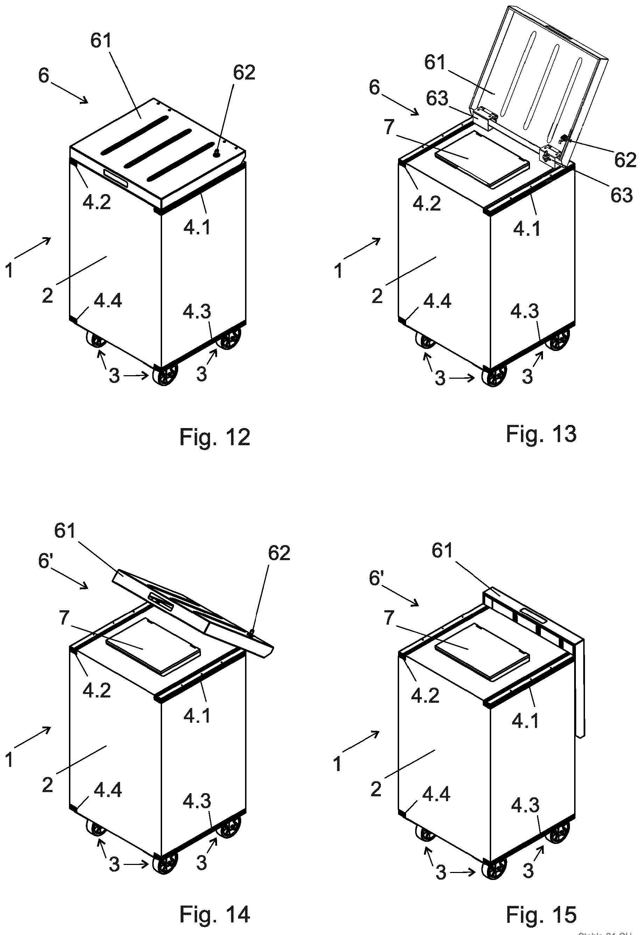

Fig. 12 zeigt eine aufklappbare Abdeckung 6 für die zweite distale Seite des Rollwagens 1. Die Abdeckung 6 ist ausgebildet die zweite distale Seite des Wagengehäuses 2 abzudecken. Vorzugsweise ist die zweite distale Seite geschlossen ausgebildet, so dass darauf Objekte, wie zum Beispiel ein Computer, insbesondere Laptop, ein Notebook, ein Touchpad darauf abgelegt werden können. Die Abdeckung 6 ist vorzugsweise ausgebildet solche Objekte in einem geschlossenen Zustand abzudecken und im offenen Zustand freizugeben. Die Abdeckung 6 weist zum Beispiel einen Deckel 61, ein optionales Schloss 62 und einen Öffnungsmechanismus 63 auf.

Der Deckel 61 weist vorzugsweise vier geschlossene laterale Seiten, eine geschlossene distale Seite und eine offene distale Seite auf. Die Dimensionen und/oder die Anordnung des Deckels 61 sind vorzugsweise so ausgebildet, dass die vier geschlossenen lateralen Seiten des Deckels 61 im geschlossenen Zustand der Abdeckung bündig mit den vier lateralen Seiten des Wagengehäuses 2 sind. Allerdings können auch andere Dimensionen verwendet werden. Die lateralen Seiten haben eine Höhe (in die dritte Richtung) grösser als 1 cm, vorzugsweise als 3 cm, vorzugsweise als 5 cm, vorzugsweise als 10 cm. Die lateralen Seiten haben eine Höhe (in die dritte Richtung) kleiner als 30 cm, vorzugsweise als 20 cm, vorzugsweise als 10 cm, vorzugsweise als 7 cm, vorzugsweise als 5 cm. Die Grösse der geschlossenen distalen Seite entspricht grundsätzlich der Grösse der zweiten distalen Seite des Wagengehäuses 2. Die offene distale Seite ist im geschlossenen Zustand der Abdeckung 6 auf der zweiten distalen Seite des Wagengehäuses 2 angeordnet. Dadurch bildet die Abdeckung 6 im geschlossenen Zustand mit der zweiten distalen Seite des Wagengehäuses 2 einen geschlossen Raum, in dem schützenswerte Objekte gelagert werden können. Dies kann ein Schutz gegen Schmutz und/oder gegen Entwendung oder Zugriff sein. Für den Schutz gegen Entwendung oder Zugriff wird vorzugsweise ein optionales Schloss 62 an dem Deckel 61 angeordnet, der verhindert, dass der Deckel 61 aus der geschlossenen Position bewegt werden kann.

Der Öffnungsmechanismus 63 ist ausgebildet, den Deckel 61 mit der ersten und/oder zweiten Funktionsschiene 4.1, 4.2, insbesondere deren distale Führungsausnehmungen 42 zu verbinden. Dazu weist der Öffnungsmechanismus mindestens ein männliches Führungselement auf, das in die (distale) Führungsausnehmung 42 der ersten und/oder zweiten Funktionsschiene 4.1, 4.2 eingeführt werden kann. Vorzugsweise weist das mindestens eine männliche Führungselement ein erstes männliches Führungselement und ein zweites männliches Führungselement auf, die so so beabstandet sind, dass sie in die erste und zweite Funktionsschiene 4.1, 4.2, insbesondere deren distale Führungsausnehmungen 42 eingeführt werden können. Allerdings wäre es auch möglich, den Öffnungsmechanismus 63 mit dem mindestens einen männlichen Führungselement (mit einer oder zwei männlichen Führungselementen) nur in einer Funktionsschiene 4.1 oder 4.2 zu befestigen. Der Öffnungsmechanismus lagert den Deckel 61 so, dass dieser von dem geschlossenen Zustand in einen offenen Zustand bewegt werden kann.

In Fig. 13 ist ein offener Zustand der Abdeckung 6 mit einem ersten Ausführungsbeispiel eines Öffnungsmechanismus 63 gezeigt. Hier ist der Deckel um eine Drehachse drehbar gelagert. Die Drehachse befindet sich dabei parallel zu einer der lateralen Seiten, hier der dritten oder vierten lateralen Seite. Die Drehachse ist in der Nähe dieser lateralen Seite angeordnet. Der Deckel 61 dreht mehr als 90° bevor auf der zweiten distalen Seite des Wagengehäuses 2 im offenen Zustand anstösst und durch sein Eigengewicht stabil in diesem Zustand bleibt.

In Fig. 14 und 15 ist ein zweiter Öffnungsmechanismus 63' einer alternativen Abdeckung 6' gezeigt. Hier weisen zwei der lateralen Seiten des Deckels 61 eine Führung auf. Der Öffnungsmechanismus lagert nun die Führungen des Deckels 61 an zwei Drehpunkten. Dies erlaubt, den Deckel 61 um die Drehpunkte zu drehen und gleichzeitig den Deckel 61 relativ zu den Drehpunkten zu verschieben. So kann Deckel 61 angehoben werden und an einer lateralen Seite des Wagengehäuses 2 im offenen Zustand abgestellt werden.

Die beschriebenen Ausführungsbeispiele zeigen nur einige wenige Beispiele für Funktionserweiterungen des erfindungsgemässen Rollwagens. Die Erfindung soll nicht auf die gezeigten Funktionserweiterungen beschränkt sein. Viele weitere nicht gezeigte Funktionserweiterungen sind ebenfalls möglich.

## Patentansprüche

1. Rollwagen aufweisend ein Wagengehäuse (2) mit einer ersten distalen Seite, einer zweiten distalen Seite, die der ersten distalen Seite gegenüber liegt, vier lateralen Seiten und einen Rollmechanismus (3) zum Rollen des Rollwagens (1) an der ersten distalen Seite ; wobei das Wagengehäuse (2) mindestens eine Funktionsschiene (4) zur Einführung eines Funktionselements aufweist, wobei jede der mindestens einen Funktionsschiene (4) entlang einer Schienenkante angeordnet ist, wobei die Schienenkante jeweils zwischen einer der distalen Seiten und einer der lateralen Seiten angeordnet ist, wobei die mindestens eine Funktionsschiene (4) eine erste Funktionsschiene (4.1) an einer ersten Schienenkante und eine zweite Funktionsschiene (4.2) an einer zweiten Schienenkante aufweist, wobei die erste Schienenkante zwischen der zweiten distalen Seite und einer ersten lateralen Seite der vier lateralen Seiten angeordnet ist, wobei die zweite Schienenkante zwischen der zweiten distalen Seite und einer zweiten lateralen Seite der vier lateralen Seiten angeordnet ist, wobei die zweite laterale Seite der ersten lateralen Seite gegenüberliegt, **dadurch gekennzeichnet, dass**
jede der mindestens einen Funktionsschiene (4) eine laterale Führungsausnehmung (41), die an der lateralen Seite der Schienenkante und
parallel zu der Schienenkante angeordnet ist, und eine distale
Führungsausnehmung (42), die an der distalen Seite der Schienenkante und parallel zu der Schienenkante angeordnet ist, aufweist.

2. Rollwagen nach Anspruch 1, wobei die laterale Führungsausnehmung (41) die gleiche Form oder den gleichen Querschnitt wie die distale Führungsausnehmung (42) aufweist.

3. Rollwagen nach einem der Ansprüche 1 bis 2, wobei die laterale Führungsausnehmung (41) eine Führungsöffnung auf der lateralen Seite der Schienenkante und die distale Führungsausnehmung (42) eine Führungsöffnung auf der distalen Seite der Schienenkante aufweist.

4. Rollwagen nach einem der Ansprüche 1 bis 3, wobei die laterale und die distale Führungsausnehmung (41, 42) jeweils mindestens auf einer lateralen Seite, die der lateralen Seite der Schienenkante benachbart ist, eine Einführungsöffnung zum Einführen von Funktionselementen in die Führungsöffnung aufweist.

5. Rollwagen nach Anspruch 4, wobei die laterale und die distale Führungsausnehmung (41, 42) an jeder der mindestens einen Einführungsöffnung einen Befestigungsmechanismus (43, 44) zum Befestigen eines in die Führungsausnehmung (41, 42) eingeführten Führungselements aufweist.

6. Rollwagen nach Anspruch 5, wobei der Befestigungsmechanismus (43, 44) eine Schraube ist, deren Schraubenkopf teilweise auf der der lateralen Seite der Schienenkante benachbarten lateralen Seite hervorsteht, um betätigt werden zu können, und/oder deren Schraubrichtung parallel zu der der lateralen Seite der Schienenkante benachbarten lateralen Seite ist.

7. Rollwagen nach einem der Ansprüche 1 bis 6, wobei die mindestens eine Funktionsschiene (4) mindestens zwei Funktionsschienen (4) aufweist, die parallel zueinander angeordnet sind.

8. Rollwagen nach einem der Ansprüche 1 bis 7, wobei die mindestens eine Funktionsschiene (4) eine dritte Funktionsschiene (4.3) an einer dritten Schienenkante und eine vierte Funktionsschiene (4.4) an einer vierten Schienenkante aufweist, wobei die dritte Schienenkante zwischen der ersten distalen Seite und der ersten lateralen Seite angeordnet ist, wobei die vierte Schienenkante zwischen der ersten distalen Seite und der zweiten lateralen Seite angeordnet ist.

9. Rollwagen nach dem vorigen Anspruch, wobei der Rollmechanismus (3) vier Rollen aufweist, die an den vier Ecken der ersten distalen Seite befestigt sind, wobei der Rollmechanismus (3) entfernbar auf der ersten distalen Seite befestigt ist, wobei der Rollmechanismus (3) in der dritten und vierten Funktionsschiene (4.3, 4.4) entfernbar befestigt ist.

10. Rollwagen nach dem vorigen Anspruch, wobei der Rollmechanismus in den distalen Führungsausnehmungen (42) der dritten und vierten Funktionsschiene entfernbar befestigt ist.

11. Rollwagenset aufweisend einen ersten Rollwagen (1, 1.1) nach einem der vorigen Ansprüche und ein Funktionselement (5, 6, 8).

12. Rollwagenset nach Anspruch 11, wobei das Funktionselement (5) ein Verbindungselement ist, das an einer ersten Seite ein erstes männliches Führungselement (51) aufweist, das ausgebildet ist, in eine der Führungsausnehmungen der Funktionsschienen des ersten Rollwagens (1, 1.1) eingeführt und darin gehalten zu werden, und das an einer zweiten Seite ein zweites männliches Führungselement (52) aufweist, das ausgebildet ist, in eine der Führungsausnehmungen (41, 42) der Funktionsschienen (4) des ersten Rollwagens (1, 1.1) eingeführt und darin gehalten zu werden.

13. Rollwagenset nach Anspruch 12, aufweisend einen zweiten Rollwagen (1.2, 1.3) nach einem der Ansprüche 1 bis 10, wobei das Verbindungselement (5) ausgebildet ist, auf einer ersten Seite in eine der Führungsausnehmung (41, 42) des ersten Rollwagens (1.1) befestigt zu werden und auf einer zweiten Seite in eine der Führungsausnehmungen (41, 42) des zweiten Rollwagens (1.2, 1.3) befestigt zu werden, so dass der erste Rollwagen (1.1) und der zweite Rollwagen (1.2, 1.3) über das Verbindungselement gekoppelt sind.

14. Rollwagenset nach Anspruch 13, aufweisend ein zweites Verbindungselement (5), wobei der erste Rollwagen (1.1) und der zweite Rollwagen (1.2., 1.3) ein Rollwagen nach Anspruch 10 ist, wobei das Rollwagenset ausgebildet ist, in den folgenden Zuständen gekoppelt zu werden:
in einem ersten Koppelungszustand wird die laterale Führungsausnehmung (41) der ersten oder zweiten Funktionsschiene (4.1, 4.2) des ersten Rollwagens (1.1) über das erste Verbindungselement (5.1) mit der lateralen Führungsausnehmung (41) der ersten oder zweiten Funktionsschiene (4.1, 4.2) des zweiten Rollwagens (1.2) gekoppelt und die laterale Führungsausnehmung (41) der dritten oder vierten Funktionsschiene (4.3, 4.4) des ersten Rollwagens (1.1) über das zweite Verbindungselement (5.2) mit der lateralen Führungsausnehmung (41) der dritten oder vierten Funktionsschiene (4.3, 4.4) des zweiten Rollwagens
(1.2) gekoppelt, und
in einem zweiten Koppelungszustand wird der Rollmechanismus aus den distalen Führungsausnehmungen (42) der dritten und vierten Funktionsschiene entfernt und wird die distale Führungsausnehmung (42) der ersten Funktionsschiene (4.1) des ersten Rollwagens (1.1) über das erste Verbindungselement (5.3) mit der distalen Führungsausnehmung (42) der dritten Funktionsschiene (4.3) des zweiten Rollwagens (1.3) gekoppelt und die distale Führungsausnehmung (42) der zweiten Funktionsschiene (4.2) des ersten Rollwagens (1.1) über das zweite Verbindungselement mit der distalen Führungsausnehmung (42) der vierten Funktionsschiene (4.4) des zweiten Rollwagens (1.3) gekoppelt.

## Claims

1. A trolley comprising a trolley body (2) having a first distal side, a second distal side opposite to the first distal side, four lateral sides, and a rolling mechanism (3) for rolling the trolley (1) on the first distal side; wherein the trolley housing (2) has at least one functional rail (4) for inserting a functional element, wherein each of the at least one functional rails (4) is arranged along a rail edge, wherein the rail edge is in each case arranged between one of the distal sides and one of the lateral sides, wherein the at least one functional rail (4) comprises a first functional rail (4.1) at a first rail edge and a second functional rail (4.2) at a second rail edge, wherein the first rail edge is arranged between the second distal side and a first lateral side of the four lateral sides, wherein the second rail edge is arranged between the second distal side and a second lateral side of the four lateral sides, wherein the second lateral side is opposite the first lateral side,
**characterized in that**,
each of the at least one functional rail (4) comprises a lateral guide recess (41) being arranged on the lateral side of the rail edge and being parallel to said rail edge, and a distal guide recess (42) being arranged on a distal side of the rail edge and being parallel to said rail edge.

2. The trolley according to claim 1, wherein the lateral guide recess (41) has the same shape or the same cross-section as the distal guide recess (42).

3. The trolley according to one of the claims 1 to 2, wherein the lateral guide recess (41) has a guide opening on the lateral side of the rail edge and the distal guide recess (42) has a guide opening on the distal side of the rail edge.

4. The trolley according to one of the claims 1 to 3, wherein the lateral and the distal guide recesses (41, 42) each comprise at least on a lateral side, which is adjacent to the lateral side of the rail edge, an insertion opening for the insertion of functional elements into the guide opening.

5. The trolley according to claim 4, wherein the lateral and the distal guide recesses (41, 42) comprise on each of the at least one insertion openings a fastening mechanism (43, 44) for fastening of a guide element, when said guide element is inserted in said guide recess (41, 42).

6. The trolley according to claim 5, wherein the fastening mechanism (43, 44) is a screw, the screw head of which partially protrudes from the lateral side adjacent to the lateral side of the rail edge in order to be actuated, and/or the screwing direction of which is parallel to the lateral side adjacent to the lateral side of the rail edge.

7. The trolley according to one of the claims 1 to 6, wherein the at least one functional rail (4) comprises at least two functional rails (4) being arranged parallel in respect of each other.

8. The trolley according to one of the claims 1 to 7, wherein the at least one functional rail (4) comprises a third functional rail (4.3) at a third rail edge and a fourth functional rail (4.4) at a fourth rail edge, wherein the third rail edge is arranged between the first distal side and the first lateral side, wherein the fourth rail edge is arranged between the first distal side and the second lateral side.

9. The trolley according to the preceding claim, wherein the rolling mechanism (3) comprises four rollers attached to the four corners of the first distal side, wherein the roller mechanism (3) is removable attached to the first distal side, wherein the roller mechanism (3) is removably mounted in the third and in the fourth functional rail (4.3, 4.4).

10. The trolley according to the preceding claim, wherein the rolling mechanism is removably mounted in the distal guide recesses (42) of the third and the fourth functional rail.

11. A set of trolleys comprising a first trolley (1, 1.1) according to one of the previous claims and a functional element (5, 6, 8).

12. The set of trolleys according to claim 11, wherein the functional element (5) is a connecting element comprising a first male guide element (51) on a first side, said first male guide element being designed to be inserted and to be retained in one of the guide recesses of the functional rails of the first trolley (1, 1.1), and comprising a second male guide element (52) on a second side, said second guide element being designed to be inserted and retained in one of the guide recesses (41, 42) of the functional rail (4) of the first trolley (1, 1.1).

13. The set of trolleys according to claim 12, comprising a second trolley (1.2, 1.3) according to one of the claims 1 to 10, wherein the connecting element (5) is designed to be connected to one of the guide recesses (41, 42) of the first trolley (1.1) on a first side and to be connected to one of the guide recesses (41, 42) of the second trolley (1.2, 1.3) on a second side, such that the first trolley (1.1) und the second trolley (1.2, 1.3) are coupled through the connecting element.

14. The set of trolleys according to claim 13 comprising a second connecting element (5), wherein the first trolley (1.1) and the second trolley (1.2, 1.3) are trolleys according to claim 10, wherein the set of trolleys is designed to be coupled in the following states:
In a first coupled state the lateral guide recess (41) of the first or the second functional rail (4.1, 4.2) of the first trolley (1.1) is coupled to the lateral guide recess (41) of the first or the second functional rail (4.1, 4.2) of the second trolley (1.2) through the first connecting element (5.1), and
the lateral guide recess (41) of the third or the fourth functional rail (4.3, 4.4) of the first trolley (1.1) is coupled to the lateral guide recess (41) of the third or the fourth functional rail (4.3, 4.4) of the second trolley (1.2) through the second connecting element (5.2), and
in a second coupled state the rolling mechanism is removed from the distal guide recesses (42) of the third and the fourth functional rail and the distal guide recess (42) of the first functional rail (4.1) of the first trolley (1.1) is coupled to the distal guide recess (42) of the third functional rail (4.3) of the second trolley (1.3) through the first connecting element (5.3), and the distal guide recess (42) of the second functional rail (4.2) of the first trolley (1.1) is coupled to the distal guide recess (42) of the fourth functional rail (4.4) of the second trolley (1.3) through the second connecting element.

## Revendications

1. Chariot comprenant un boîtier de chariot (2) muni d'un premier côté distal, d'un deuxième côté distal, qui est opposé au premier côté distal, de quatre côtés latéraux et d'un mécanisme de roulement (3) pour le roulement du chariot (1) sur le premier côté distal ; dans lequel le boîtier de chariot (2) comprend au moins un rail fonctionnel (4) pour l'insertion d'un élément fonctionnel, dans lequel chacun des au moins un rail fonctionnel (4) est agencé le long d'un bord de rail, dans lequel le bord de rail est à chaque fois agencé entre un des côtés distaux et un des côtés latéraux, dans lequel l'au moins un rail fonctionnel (4) comprend un premier rail fonctionnel (4.1) sur un premier bord de rail et un deuxième rail fonctionnel (4.2) sur un deuxième bord de rail, dans lequel le premier bord de rail est agencé entre le deuxième côté distal et un premier côté latéral parmi les quatre côtés latéraux, dans lequel le deuxième bord de rail est agencé entre le deuxième côté distal et un deuxième côté latéral parmi les quatre côtés latéraux, dans lequel le deuxième côté latéral est opposé au premier côté latéral, **caractérisé en ce que**
chacun des au moins un rail fonctionnel (4) comprend un évidement de guidage latéral (41), qui est agencé sur le côté latéral du bord de rail et parallèlement au bord de rail, et un évidement de guidage distal (42), qui est agencé sur le côté distal du bord de rail et parallèlement au bord de rail.

2. Chariot selon la revendication 1, dans lequel l'évidement de guidage latéral (41) présente la même forme ou la même section transversale que l'évidement de guidage distal (42).

3. Chariot selon l'une quelconque des revendications 1 à 2, dans lequel l'évidement de guidage latéral (41) comprend une ouverture de guidage sur le côté latéral du bord de rail et l'évidement de guidage distal (42) comprend une ouverture de guidage sur le côté distal du bord de rail.

4. Chariot selon l'une quelconque des revendications 1 à 3, dans lequel l'évidement de guidage latéral et l'évidement de guidage distal (41, 42) comprennent à chaque fois, au moins sur un côté latéral, qui est voisin du côté latéral du bord de rail, une ouverture d'insertion pour l'insertion d'éléments fonctionnels dans l'ouverture de guidage.

5. Chariot selon la revendication 4, dans lequel l'évidement de guidage latéral et l'évidement de guidage distal (41, 42) comprennent, sur chacune des au moins une ouverture d'insertion, un mécanisme de fixation (43, 44) pour la fixation d'un élément de guidage inséré dans l'évidement de guidage (41, 42).

6. Chariot selon la revendication 5, dans lequel le mécanisme de fixation (43, 44) est une vis, dont la tête de vis fait saillie partiellement sur le côté latéral voisin du côté latéral du bord de rail, afin de pouvoir être actionnée, et/ou dont la direction de vissage est parallèle au côté latéral voisin du côté latéral du bord de rail.

7. Chariot selon l'une quelconque des revendications 1 à 6, dans lequel l'au moins un rail fonctionnel (4) comprend au moins deux rails fonctionnels (4), qui sont agencés parallèlement l'un à l'autre.

8. Chariot selon l'une quelconque des revendications 1 à 7, dans lequel l'au moins un rail fonctionnel (4) comprend un troisième rail fonctionnel (4.3) sur un troisième bord de rail et un quatrième rail fonctionnel (4.4) sur un quatrième bord de rail, le troisième bord de rail étant agencé entre le premier côté distal et le premier côté latéral, le quatrième bord de rail étant agencé entre le premier côté distal et le deuxième côté latéral.

9. Chariot selon la revendication précédente, dans lequel le mécanisme de roulement (3) comprend quatre roulettes, qui sont fixées aux quatre coins du premier côté distal, le mécanisme de roulement (3) étant fixé de manière amovible sur le premier côté distal, le mécanisme de roulement (3) étant fixé de manière amovible dans le troisième et le quatrième rail fonctionnel (4.3, 4.4).

10. Chariot selon la revendication précédente, dans lequel le mécanisme de roulement est fixé de manière amovible dans les évidements de guidage distaux (42) du troisième et du quatrième rail fonctionnel.

11. Ensemble de chariots comprenant un premier chariot (1, 1.1) selon l'une quelconque des revendications précédentes et un élément fonctionnel (5, 6, 8).

12. Ensemble de chariots selon la revendication 11, dans lequel l'élément fonctionnel (5) est un élément de liaison qui comprend, sur un premier côté, un premier élément de guidage mâle (51), qui est configuré pour être inséré dans un des évidements de guidage des rails fonctionnels du premier chariot (1, 1.1) et y être maintenu, et qui comprend, sur un deuxième côté, un deuxième élément de guidage mâle (52), qui est configuré pour être inséré dans un des évidements de guidage (41, 42) des rails fonctionnels (4) du premier chariot (1, 1.1) et y être maintenu.

13. Ensemble de chariots selon la revendication 12, comprenant un deuxième chariot (1.2, 1.3) selon l'une quelconque des revendications 1 à 10, dans lequel l'élément de liaison (5) est configuré pour être fixé sur un premier côté dans un des évidements de guidage (41, 42) du premier chariot (1.1) et pour être fixé sur un deuxième côté dans un des évidements de guidage (41, 42) du deuxième chariot (1.2, 1.3), de telle sorte que le premier chariot (1.1) et le deuxième chariot (1.2, 1.3) sont couplés par l'intermédiaire de l'élément de liaison.

14. Ensemble de chariots selon la revendication 13, comprenant un deuxième élément de liaison (5), dans lequel le premier chariot (1.1) et le deuxième chariot (1.2, 1.3) sont un chariot selon la revendication 10, dans lequel l'ensemble de chariots est configuré pour être couplé dans les états suivants :
dans un premier état de couplage, l'évidement de guidage latéral (41) du premier ou du deuxième rail fonctionnel (4.1, 4.2) du premier chariot (1.1) est couplé par l'intermédiaire du premier élément de liaison (5.1) avec l'évidement de guidage latéral (41) du premier ou du deuxième rail fonctionnel (4.1, 4.2) du deuxième chariot (1.2) et l'évidement de guidage latéral (41) du troisième ou du quatrième rail fonctionnel (4.3, 4.4) du premier chariot (1.1) est couplé par l'intermédiaire du deuxième élément de liaison (5.2) avec l'évidement de guidage latéral (41) du troisième ou du quatrième rail fonctionnel (4.3, 4.4) du deuxième chariot (1.2), et
dans un deuxième état de couplage, le mécanisme de roulement est retiré des évidements de guidage distaux (42) du troisième et du quatrième rail fonctionnel et l'évidement de guidage distal (42) du premier rail fonctionnel (4.1) du premier chariot (1.1) est couplé par l'intermédiaire du premier élément de liaison (5.3) avec l'évidement de guidage distal (42) du troisième rail fonctionnel (4.3) du deuxième chariot (1.3) et l'évidement de guidage distal (42) du deuxième rail fonctionnel (4.2) du premier chariot (1.1) est couplé par l'intermédiaire du deuxième élément de liaison avec l'évidement de guidage distal (42) du quatrième rail fonctionnel (4.4) du deuxième chariot (1.3).
